# EUROPÄISCHE PATENTSCHRIFT

(11) **EP 3 160 791 B1**
(45) Veröffentlichungstag und Bekanntmachung des Hinweises auf die Patenterteilung: **07.08.2019**
(21) Anmeldenummer: 15757173.8
(22) Anmeldetag: 14.08.2015
(51) Int. Cl.: B60L 9/22, B60L 5/22, B60M 1/36, B60L 5/42

(54) **ELEKTRISCHE SCHALTUNG FÜR EIN FAHRZEUG UND VERFAHREN ZUR KONTAKTAUFNAHME UND/ODER -BEENDIGUNG EINES FAHRZEUGS MIT EINEM FAHRZEUGEXTERNEN ELEKTRISCHEN NETZ**
ELECTRICAL CIRCUIT FOR A MOTOR VEHICLE AND METHOD FOR ESTABLISHING CONTACT AND/OR TERMINATING CONTACT OF A VEHICLE WITH A VEHICLE-EXTERNAL ELECTRICAL NETWORK
CIRCUIT ÉLECTRIQUE POUR VÉHICULE ET PROCÉDÉ DE PRISE DE CONTACT ET/OU DE CESSATION DE CONTACT ENTRE UN VÉHICULE ET UN RÉSEAU ÉLECTRIQUE EXTERNE AU VÉHICULE

(30) Priorität: 28.08.2014 DE 102014217219
(43) Veröffentlichungstag der Anmeldung: 03.05.2017
(73) Patentinhaber: Siemens Mobility GmbH, 81739 München (DE)
(72) Erfinder: NOACK, Maik, 15913 Spreewaldheide Ortsteil Laasow (DE)
(86) Internationale Anmeldenummer: PCT/EP2015/068730
(87) Internationale Veröffentlichungsnummer: WO 2016/030210

(56) Entgegenhaltungen:
- EP-A1- 2 275 300
- DE-A1-102010 029 450
- US-A1- 2012 226 398

## Beschreibung

Die Erfindung betrifft eine elektrische Schaltung für ein Fahrzeug, mit wenigstens einem elektrischen Kontaktmittel zur zeitweise lösbaren elektrischen Verbindung mit einem fahrzeugexternen elektrischen Netz und mit einem fahrzeuginternen elektrischen Netz.

Die Erfindung betrifft weiterhin ein Verfahren zur Kontaktaufnahme und/oder -beendigung eines Fahrzeugs mit einem fahrzeugexternen elektrischen Netz.

Die genannte Schaltung und das genannte Verfahren sind beispielsweise aus der DE 102010029450 A1 bekannt und werden eingesetzt, bei einem Fahrzeug, das zeitweise mit einem externen elektrischen Netz verbunden wird, um seinen Energiespeicher aufzuladen. Bei der Ausfahrt aus einem solchen Einspeiseabschnitt würde der Netzstrom, der einen Energiespeicher des Fahrzeugs speist, durch den Kontaktabriss unterbrochen. Die Einspeiseeinrichtung des externen Netzes ist beispielsweise eine Oberleitung, eine Deckenstromschiene, eine dritte Schiene oder ähnliches. Das Fahrzeug kann hier beispielsweise eine Straßenbahn, ein Elektrobus oder ein ähnliches Fahrzeug sein. Durch Ausgleichsvorgänge im Gleichstromnetz beziehungsweise das Einprägen des Drehstroms am Fahrmotor des Fahrzeugs fließt der Strom über die sich öffnende Kontaktstelle zwischen Kontaktmittel und externem Netz weiter und es kann zur Funkenbildung kommen. Bei Gleichstromanwendungen kann der Funken nicht selbstständig verlöschen, da im Gegensatz zum Wechselstrom kein Nulldurchgang des Stroms vorhanden ist. Der Funke kann durch die Vergrößerung des Abstandes zwischen den Kontakten zum Erlöschen gebracht werden. Dieses unkontrollierte Löschen funktioniert allerdings nur bis zu einem gewissen Maximalstrom, abhängig von Oberleitungsgeometrien und den Abständen zu anderen leitfähigen Teilen. Wird der Maximalstrom überschritten, kann es in ungünstigen Konstellationen zum Überschlag des Funkens auf leitfähige Teile des Fahrzeugs oder der fahrbahnseitigen Installationen kommen, die hierdurch beschädigt oder zerstört werden können. Diese Überschläge können noch durch leitfähige Verschmutzungen oder Feuchtigkeit begünstigt werden.

In der US 2012/0226398 A1 ist ein Verfahren beschrieben, mit dem die Polarität der Spannungsversorgung auf einem Fahrzeug gesteuert werden kann.

In der DE 102010029450 A1 ist eine Schaltung und ein Verfahren beschrieben, durch die der Funkenabriss und auch andere Nachteile vermieden werden können. Dazu ist es jedoch vorteilhaft, den Zeitpunkt der Maßnahmen vor der Kontaktbeendigung zwischen dem Kontaktmittel und der Energiequelle sehr genau zu planen. Zum Einen soll nämlich das Fahrzeug möglichst lange seinen Energiespeicher auffüllen können. Aber zum Anderen soll das in der DE 102010029450 A1 beschriebene Verfahren rechtzeitig eingeleitet werden, um den Netzstrom vor dem Ablösen des Kontaktmittels, das beispielsweise ein Stromabnehmer ist, verlöschen zu lassen. Dies wird in der DE 102010029450 A1 durch ein Erkennungsmittel an der Fahrstrecke erreicht, das beispielsweise RFID-Elemente oder Balisen umfasst, die eine entsprechende Ortsinformation übermitteln, wann die Maßnahmen der DE 102010029450 A1 einzuleiten sind.

Die verwendeten Erkennungsmittel sind üblicherweise am Gleis oder an der Straße angeordnet, in jedem Fall also extern vom Fahrzeug. Dies führt dazu, dass beispielsweise bei Umbauten der Fahrstrecke auch die Signaltechnik mit umgebaut werden muss, was sehr aufwendig sein kann. Ferner sind die Hersteller von Fahrzeug und Streckensignaltechnik häufig unterschiedlich, was zu Schnittstellenproblemen führen kann.

Der vorliegenden Erfindung liegt somit die Aufgabe zugrunde, eine Schaltung und ein Verfahren der eingangs genannten Art bereitzustellen, das weniger abhängig von externen Systemen ist.

Diese Aufgabe wird durch den Gegenstand von Patentanspruch 1 gelöst.

Die Aufgabe wird ferner durch das Verfahren von Patentanspruch 6 gelöst.

Die erfindungsgemäße Lösung hat den Vorteil, dass die Kontaktaufnahme und/oder -beendigung zwischen Kontaktmittel und externem Netz als Signal genutzt wird und dadurch zusätzliche fahrstreckenseitige Sensorik überflüssig ist. Da die elektrische Verbindung zwischen externem Netz und dem internen Netz durch das Schaltmittel zunächst getrennt ist, können die Maßnahmen der DE 102010029450 A1 bei Kontakt zwischen Kontaktmittel und externem Netz angewendet werden.

Die erfindungsgemäße Lösung kann durch voneinander abhängige vorteilhafte Ausgestaltungen weiterentwickelt werden, die im Folgenden beschrieben sind.

Die Detektoreinrichtung ist erfindungsgemäß so ausgebildet, dass sie bei getrennter Verbindung zwischen dem Kontaktmittel und dem fahrzeuginternen Netz ermittelt, ob eine Verbindung zwischen dem Kontaktmittel und dem fahrzeugexternen Netz besteht. Die Detektoreinrichtung gibt ein für die Verbindung repräsentatives Signal aus, zum Beispiel an eine Steuerung des Fahrzeugs. Insbesondere kann eine elektrische Verbindung zwischen dem Kontaktmittel und dem fahrzeugexternen Netz geprüft werden. Dies hat den Vorteil, dass die Detektoreinrichtung ohne wartungsintensivere Sensoren, wie beispielsweise Lichtschranken, Taster oder Näherungsschalter, die den Kontakt des Kontaktmittels mit dem externen Netz prüfen, auskommt. Dadurch kann der Verschleiß beziehungsweise der Wartungsaufwand der erfindungsgemäßen Schaltung reduziert werden.

Ferner weist die Schaltung erfindungsgemäß wenigstens eine Wegmesseinrichtung auf, die ein für einen vom Fahrzeug zurückgelegten Fahrweg repräsentatives Signal ausgibt. Insbesondere kann die Detektoreinrichtung mit der Wegmesseinrichtung verbunden sein. Dies hat den Vorteil, dass lediglich die Kontaktaufnahme zwischen dem Kontaktmittel und dem externen Netz erkannt werden muss und, wenn die Länge des Kontaktabschnitts mit der Energiequelle bekannt ist, der Zeitpunkt oder die Position des Ablösens des Kontaktmittels von der Energiequelle vorausberechnet werden kann. Um die Schaltung einfach auszugestalten, kann die Detektoreinrichtung zwischen dem Kontaktmittel und dem Schaltmittel angeordnet sein.

Weiterhin kann die Detektoreinrichtung eine Spannungsmesseinrichtung mit der eine am Kontaktmittel anliegende Spannung bei getrennter Verbindung zwischen Kontaktmittel und internem Netz erfassbar ist. Durch die Trennung von Kontaktmittel und internem Netz im Fahrzeug ist bei der Kontaktaufnahme mit dem externen Netz der Spannungsanstieg im Kontaktmittel besonders leicht zu detektieren. Daher ist es vorteilhaft, den Spannungsanstieg als repräsentative Größe für die Kontaktaufnahme des Kontaktmittels mit dem externen Netz zu messen. Ein Spannungswandler ist hierfür besonders geeignet.

Um die Kontaktaufnahme und/oder -beendigung der Kontaktmittel bei Fahrzeugen mit mehreren Kontaktmitteln einzeln detektieren zu können, kann die Schaltung wenigstens zwei Kontaktmittel, wenigstens zwei Schaltmittel und wenigstens zwei Detektoreinheiten aufweisen und es kann jedem Kontaktmittel wenigstens ein Schaltmittel und wenigstens eine Detektoreinheit zugeordnet sein.

Um die Vorteile der Erfindung besonders gut nutzen zu können, kann die Schaltung im internen Netz wenigstens einen Energiespeicher und/oder einen Antrieb aufweisen.

Erfindungsgemäß wird die Kontaktbeendigung des Kontaktmittels mit dem externen Netz mit Hilfe der ermittelten Kontaktaufnahme des Kontaktmittels mit dem externen Netz vorausberechnet. Dies hat den Vorteil, dass lediglich die Kontaktaufnahme detektiert werden muss.

Die Kontaktbeendigung kann erfindungsgemäß anhand des vom Fahrzeug zurückgelegten Weges seit der Kontaktaufnahme vorausberechnet werden. Dies hat den Vorteil, dass Fahrweginformationen in den bekannten Fahrzeugen bereits vorhanden ist und somit die Kontaktbeendigung auf einfache Weise berechnet werden kann.

Um ein einfach detektierbares Indiz für die Kontaktaufnahme zu nutzen, kann die Kontaktaufnahme oder -beendigung durch eine Änderung der am Kontaktmittel anliegenden Spannung ermittelt werden.

Um die Genauigkeit bei der Ermittlung der Kontaktaufnahme oder Kontaktbeendigung zu verbessern, kann erfindungsgemäß die ermittelte Kontaktaufnahme und/oder -beendigung mit bekannten Informationen über den Fahrweg des Fahrzeugs verglichen werden. Fahrstreckeninformationen sind beispielsweise über Fahrgastinformationssysteme oder Zugbeeinflussungssysteme im Fahrzeug bekannt und enthalten unter anderem die Länge einer Haltestelle oder eines Einspeiseabschnitts, die für die Kontaktlänge mit dem externen Netz repräsentativ ist beziehungsweise aus der sie sich berechnen lässt.

Um die Genauigkeit der gemessenen Zeitpunkte oder Positionen überprüfen zu können, können die Kontaktaufnahmen von mehreren Kontaktmitteln des Fahrzeugs mit dem externen Netz für jedes Kontaktmittel separat ermittelt werden.

Im Folgenden wird die Erfindung mit Bezug auf die beigefügten Zeichnungen und der darin dargestellten beispielhaften Ausführungsform der Erfindung beschrieben.

Es zeigen:
- Figur 1: eine schematische Darstellung einer beispielhaften Ausführungsform der erfindungsgemäßen Schaltung und eines Fahrzeugs;
- Figuren 2 - 6: das Fahrzeug und die Schaltung aus Figur 1 in verschiedenen Positionen.

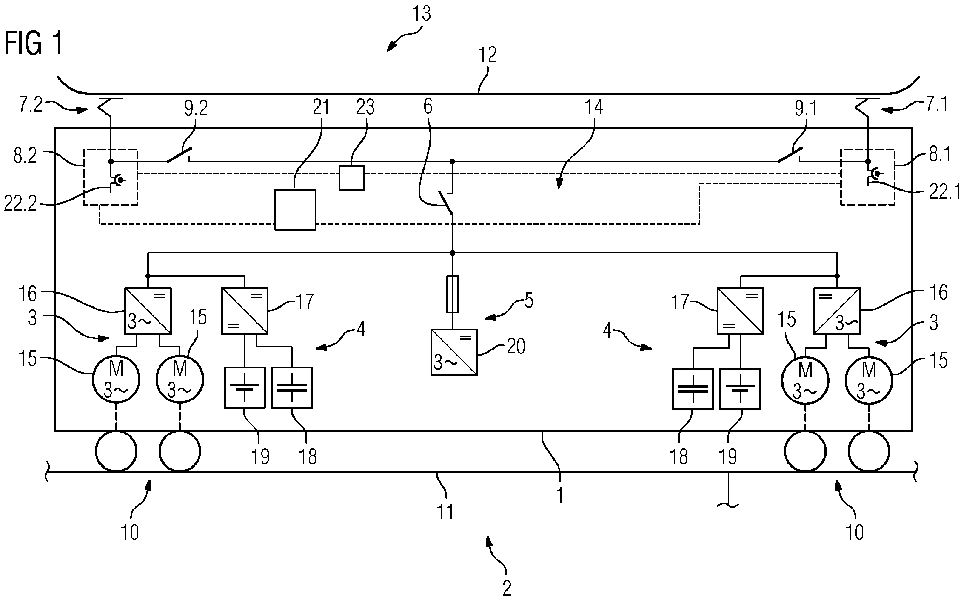

Zunächst wird die Erfindung mit Bezug auf die beispielhafte Ausführungsform der Figur 1 beschrieben. Figur 1 zeigt ein Fahrzeug 1, das eine beispielhafte Ausführungsform der erfindungsgemäßen elektrischen Schaltung 2 aufweist. Die schematische Darstellung des Fahrzeug 1 in Figur 1 kann beispielsweise eine Straßenbahn, ein Auto, ein Bus, ein LKW oder ein anderes Schienenfahrzeug sein.

Das Fahrzeug 1 weist elektrische Antriebe 3, Energiespeicher 4, ein Bordnetz 5, einen Hauptschalter 6, zwei Kontaktmittel 7, zwei Detektoreinrichtungen 8 und zwei Schaltmittel 9 auf. Weiterhin umfasst das Fahrzeug 1 Räder 10, mit denen es auf einer Fahrbahn 11 angeordnet ist, die beispielsweise ein Schienenpaar, eine Straße oder eine Fahrrinne sein kann. In Figur 1 oberhalb vom Fahrzeug 1 dargestellt, ist eine Oberleitung 12 als Teil eines fahrzeugexternen elektrischen Netzes 13 angeordnet. Die Antriebe 3, die Energiespeicher 4, das Bordnetz 5 und der Hauptschalter 6 bilden bei der beispielhaften Ausführungsform in Figur 1 ein fahrzeuginternes elektrisches Netz 14 des Fahrzeugs 1 aus. Weiterhin weist das Fahrzeug 1 eine Steuerung 23 auf, welche die genannten Komponenten steuert. Die Detektoreinrichtung 8 kann auch in der Steuerung 23 ausgebildet sein.

Das Fahrzeug 1 weist beispielsweise jeweils zwei Kontaktmittel 7, Detektoreinrichtungen 8 und Schaltmittel 9 auf. Um gleiche Bauteile voneinander zu unterscheiden, sind sie teilweise z. B. mit 7.1, 7.2 bezeichnet. Trotzdem sind 7.1, 7.2 baugleich mit 7. Bezugszeichen ohne Erweiterung, wie z.B. 7, umfassen immer auch die Bezugszeichen mit Erweiterung, wie z.B. 7.1.

Die Antriebe 3 weisen in Figur 1 beispielhaft jeweils zwei Drehstrommotoren 15 und einen Umrichter 16 auf. Die Drehstrommotoren 15 der Antriebe 3 sind, in Figur 1 lediglich schematisch dargestellt, mit den Rädern 10 des Fahrzeugs 1 verbunden, um diese anzutreiben.

Die Energiespeicher 4 bestehen jeweils aus einem Gleichspannungswandler 17, einem Kondensator 18 und einer Batterie 19. Die Energiespeicher 4 können die elektrischen Verbraucher des fahrzeuginternen Netzes 14, wie die Antriebe 3 und das Bordnetz 5, wenigstens zeitweise mit elektrischer Energie versorgen. Die Energiespeicher 4 können durch elektrische Energie aufgeladen werden, die beispielsweise von den Antrieben 3 beim Abbremsen des Fahrzeugs 1 produziert werden kann oder die vom fahrzeugexternen Netz 13 in das Fahrzeug 1 eingespeist wird, wie im Folgenden noch näher erläutert wird.

Das Bordnetz 5 ist in Figur 1 lediglich schematisch dargestellt und enthält stellvertretend einen Bordnetzumrichter 20. Selbstverständlich umfasst das Bordnetz 5 weitere hier nicht dargestellte elektrische Verbraucher und andere elektrische Bauteile. Der Hauptschalter 6 ist so angeordnet, dass durch ihn das fahrzeuginterne Netz 14 von den Kontaktmitteln 7 trennbar ist. Im normalen Betrieb ist der Hauptschalter 6 geschlossen.

Ferner umfasst das Fahrzeug 1 eine Wegmesseinrichtung 21, die den zurückgelegten Fahrweg des Fahrzeugs 1 erfasst und ein für den Fahrweg repräsentatives Signal, beispielsweise an die Steuerung 23, ausgibt. Die Wegmesseinrichtung 21 ist in bekannter Weise ausgeführt und beispielsweise mit den Rädern 10 über eine entsprechende Sensorik (nicht dargestellt) verbunden.

Die Kontaktmittel 7 sind beispielsweise als Stromabnehmer ausgebildet und oben am Fahrzeug 1 angebracht. Die Kontaktmittel 7 können in an sich bekannter Weise einen elektrischen Kontakt mit der Oberleitung 12 des fahrzeugexternen Netzes 13 herstellen, um beispielsweise die Antriebe 3 und/oder die Energiespeicher 4 mit elektrischer Energie zu versorgen. Dazu sind die Kontaktmittel 7 über den Hauptschalter 6 mit dem fahrzeuginternen Netz 14 elektrisch verbunden. Alternativ zur Oberleitung 12 kann das fahrzeugexterne Netz 13 für den Kontakt mit den Kontaktmitteln 7 beispielsweise auch eine Deckenstromschiene, eine dritte Schiene oder ähnliches aufweisen.

Die Detektoreinrichtungen 8 weisen jeweils eine Spannungsmesseinrichtung 22 auf, die in der beispielhaften Ausführungsform in Figur 1 als ein Spannungswandler ausgebildet ist. Die Detektoreinrichtungen 8 sind jeweils mit den Kontaktmitteln 7 elektrisch verbunden und signaltechnisch mit der Wegmesseinrichtung 21 verbunden.

Die Schaltmittel 9 sind in der beispielhaften Ausführungsform der Figur 1 als Schalter ausgebildet. Sie können alternativ auch ein Relais, Schütz oder ähnliches sein. Die Schaltmittel 9 sind jeweils zwischen der Detektoreinrichtung 8 und dem fahrzeuginternen Netz 14 angeordnet. Die Detektoreinrichtung 8 wiederum ist jeweils zwischen dem Schaltmittel 9 und dem Kontaktmittel 7 angeordnet.

Um bei der Kontaktaufnahme und/oder der Kontaktbeendigung des Fahrzeugs 1 mit der Oberleitung 12 des fahrzeugexternen Netzes 13 Lichtbögen und ähnliche unerwünschte Vorkommnisse zu vermeiden, werden in dem Fahrzeug 1 die in der DE 102010029450 A1 beschriebenen Maßnahmen ergriffen. Auf die DE 102010029450 A1 wird hiermit Bezug genommen und deren Inhalt gilt in dieser Patentanmeldung als vollständig umfasst. Die Schaltung 2 der Fig. 1-6 ist entsprechend der DE 102010029450 A1 ausgebildet. Um einen geeigneten Zeitpunkt beziehungsweise Position für die Einleitung des Verfahrens der DE 102010029450 A1 zu bestimmen, nutzt die vorliegende Erfindung den Zeitpunkt beziehungsweise das Ereignis der Kontaktaufnahme und/oder der ermittelten Kontaktbeendigung der Kontaktmittel 7 mit der Oberleitung 12.

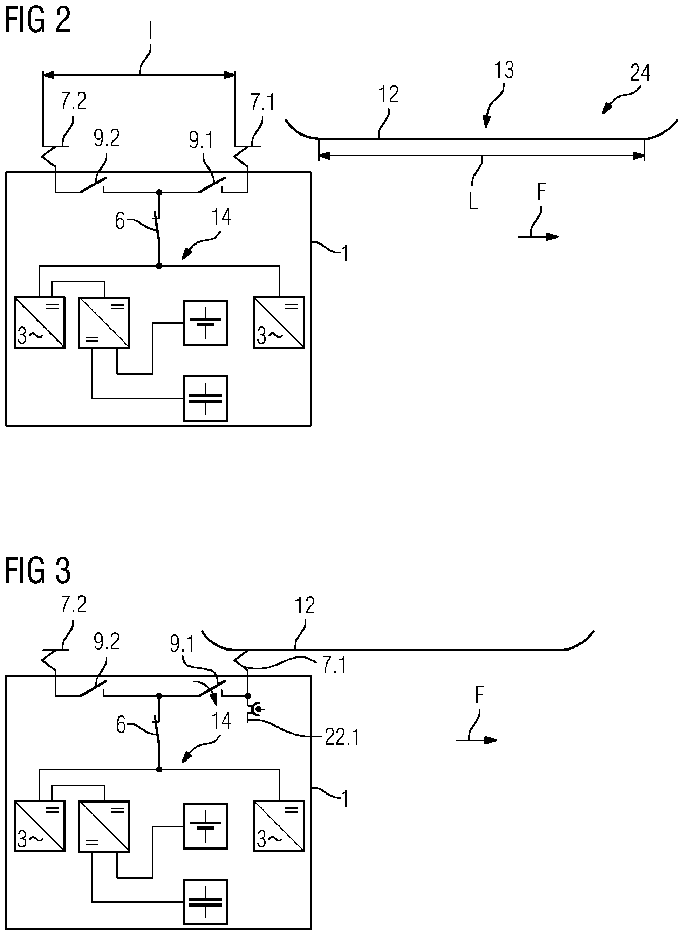

Die Kontaktherstellung beziehungsweise Kontaktbeendigung des Fahrzeugs 1 mit der Oberleitung 12 - also die Ein- und Ausfahrt in einen und aus einem Einspeiseabschnitt 24 - gemäß der vorliegenden Erfindung wird im Folgenden mit Bezug auf die Figuren 2 - 6 beschrieben.

In den Figuren 2 - 6 sind verschiedene Positionen des Fahrzeugs 1 aus Figur 1 relativ zur Oberleitung 12 des Einspeiseabschnitts 24 dargestellt. Auch wenn das Fahrzeug 1 in den Figuren 2 - 6 lediglich sehr schematisch dargestellt ist und einige Komponenten der Einfachheit halber weggelassen wurden, so handelt es sich trotzdem jeweils um das Fahrzeug 1, wie es oben im Bezug auf Figur 1 beschrieben wurde und gezeigt ist. In den Figuren 2 - 6 ist eine Fahrt des Fahrzeugs 1 auf der Fahrbahn 11 von links nach rechts relativ zu der positionsfesten Oberleitung 12 im Einspeiseabschnitt 24 dargestellt.

In Figur 2 befindet sich das Fahrzeug 1 noch ohne Kontakt zur Oberleitung 12. Die Antriebe 3, die das Fahrzeug 1 in einer Fahrtrichtung F antreiben, werden in dieser Position von den Energiespeichern 4 mit elektrischer Energie versorgt. In Figur 2 sind die beiden Schaltmittel 9 geöffnet, so dass die Kontaktmittel 7 jeweils vom internen Netz 14 getrennt sind.

Figur 3 zeigt den Zeitpunkt beziehungsweise die Position, in der das in einer Fahrtrichtung F vordere Kontaktmittel 7.1 des Fahrzeugs 1 die Oberleitung kontaktiert - also die Kontaktaufnahme dieses Kontaktmittels 7.1 mit dem fahrzeugexternen Netz 13. In Figur 3 ist der Kontakt zwischen dem ersten Kontaktmittel 7.1 und der Oberleitung 12 hergestellt, so dass das Kontaktmittel 7.1 auf dem Potenzial der Oberleitung 12 liegt. Da an der Oberleitung 12 eine Spannung, beispielsweise 750 Volt, anliegt, stellt sich diese Spannung auch im Kontaktmittel 7.1 ein. Das Schaltmittel 9 trennt das Kontaktmittel 7 vom fahrzeuginternen Netz 14, so dass nur das vordere Kontaktmittel 7.1 und dessen Detektoreinrichtung 8.1 auf dem Potenzial der Oberleitung 12 sind. Der Spannungsanstieg im Kontaktmittel 7.1 bei der Kontaktaufnahme mit der Oberleitung 12 wird von der Detektoreinrichtung 8.1 mit Hilfe der Spannungsmesseinrichtung 22.1 detektiert. Die Detektoreinrichtung 8.1 erkennt daher durch den Anstieg der Spannung im Kontaktmittel 7.1, dass der Kontakt des vorderen Kontaktmittels 7.1 mit der Oberleitung 12 hergestellt ist. An dieser Position wird das Signal der Wegmesseinrichtung festgehalten, um die Position des Fahrzeugs 1 bei der Kontaktaufnahme zu speichern. Aus der Relativbewegung zu dieser Position kann beispielsweise die Position der Kontaktbeendigung vorausberechnet werden, wie im Folgenden beschrieben wird. Gemäß der vorliegenden Erfindung initiiert die ermittelte Kontaktaufnahme die in der DE 102010029450 A1 beschriebenen Maßnahmen. In der Kontaktposition ist das externe Netz 13 für das Fahrzeug 1 verfügbar, aber noch freigeschaltet vom internen Netz 14. Durch die Trennung des internen Netzes 14 vom externen Netz 13 durch das Schaltmittel 9 kann der ermittelte Kontakt als Startsignal für die Maßnahmen der DE 102010029450 A1 genutzt werden. Anschließend wird das Schaltmittel 9 durch die Steuerung 23 geschlossen und die Energie fließt.

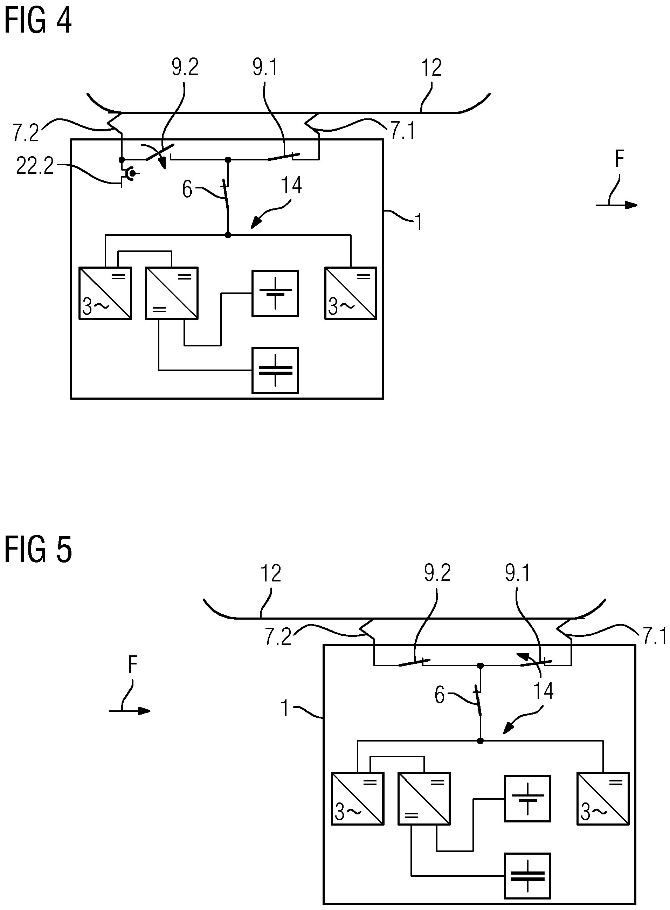

In Figur 4 ist der Zeitpunkt dargestellt, in dem das zweite, hintere Kontaktmittel 7 in Kontakt mit der Oberleitung 12 kommt. Vor diesem Zeitpunkt ist das hintere Schaltmittel 9.2 geöffnet, so dass das interne Netz 14 vom hinteren Kontaktmittel 7.2 freigeschaltet ist. Bei Kontakt des hinteren Kontaktmittels 7.2 mit der Oberleitung 12 steigt die Spannung im Kontaktmittel 7.2 an, was von dem Spannungswandler der Spannungsmesseinrichtung 22.2 gemessen wird. Die Detektoreinrichtung 8.2 gibt ein für die Kontaktaufnahme repräsentatives Signal an die Steuerung 23 weiter, die anschließend den Schalter 9.2 schließt. Die Position des Fahrzeugs 1 bei Kontaktaufnahme des Kontaktmittels 7.2 wird anhand des Signals der Wegmesseinrichtung 21 festgehalten.

Nachdem der Schalter 9.2 geschlossen ist und beide Kontaktmittel 7 in Kontakt mit der Oberleitung 12 sind, wird Energie über beide Kontaktmittel 7 in das Fahrzeug 1 eingespeist. Die Einspeisung über mehrere Kontaktmittel 7 ist vorteilhaft, da das Fahrzeug 1 im Bereich der Oberleitung 12 üblicher Weise zum Halten kommt und sich der Energiefluss dabei auf mehrere Kontaktmittel 7 in vorteilhafter Weise verteilt. So können Überbelastungen vermieden werden.

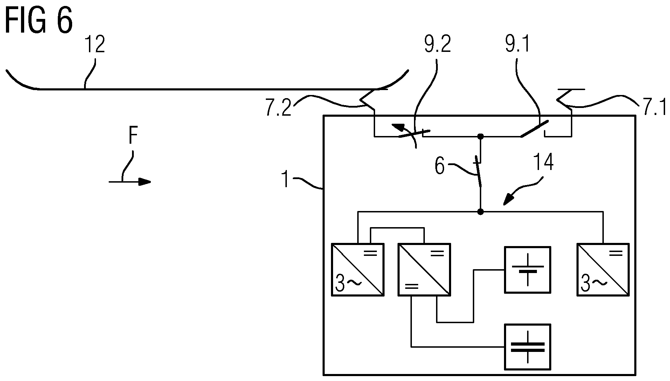

Figur 5 und Figur 6 zeigen das Fahrzeug 1 in zwei Positionen bei der Ausfahrt des Fahrzeugs 1 aus dem Einspeiseabschnitt 24, in dem die Oberleitung 12 angeordnet ist.

In Figur 5 ist die Position dargestellt, in der das vordere Kontaktmittel 7.1 den Kontakt mit der Oberleitung 12 beendet. Da die Länge L des Einspeiseabschnitts 24, also dem Kontakt mit der Oberleitung 12, bekannt ist, kann die Steuerung 23 den Zeitpunkt beziehungsweise die Position der Kontaktbeendigung bereits vorausberechnen. Hierzu werden die Daten und Informationen aus der Wegmesseinrichtung 21 verwendet. Daher kann der Schalter 9.1 von der Steuerung 23 geöffnet werden bevor der Kontakt beendet wird. Vor der Öffnung des Schaltmittels 9.1 können selbstverständlich die Maßnahmen der DE 102010029450 A1 eingeleitet werden. Das nachlaufende Kontaktmittel 7.2 übernimmt nach Öffnung des Schaltmittels 9.1 nun den Traktionsstrom, der von der Oberleitung 12 auf das Fahrzeug 1 übertragen wird. Die Spannungsmesseinrichtung 22.1 am vorlaufenden, jetzt freigeschalteten Kontaktmittel 7.1 erfasst nun bei Ausfahrt aus dem Einspeiseabschnitt anhand des Spannungsabfalls im Kontaktmittel 7.1 die Position der Kontaktbeendigung mit der Oberleitung 12. Damit ist ein Synchronisationspunkt gegeben, mit dem die aktuelle Wegzählung und die vorausberechnete Position der Kontaktbeendigung überprüft und gegebenenfalls korrigiert werden kann.

Figur 6 zeigt die Position, in der das hintere Kontaktmittel 7.2 des Fahrzeugs 1 den Kontakt mit der Oberleitung 12 verliert. Um möglichst lange die Verbindung mit der Oberleitung 12 zu halten, wird der Schalter 9.2 bis zu der vorausberechneten Kontaktbeendigung geschlossen gehalten. Allerdings wird an geeigneter Stelle ein kontrolliertes Ablösen des nachlaufenden Kontaktmittels 7.2 nach dem in der DE 102010029450 A1 beschriebenen Prinzip eingeleitet. Nach Kontaktbeendigung wird der Schalter 9.2 geöffnet, so dass die Ausgangslage für die Einfahrt in den nächsten Einspeiseabschnitt 24 mit einer Oberleitung 12 wiederhergestellt ist, wie er in Figur 2 gezeigt ist.

Bei Ausführungen mit nur einem Kontaktmittel 7 wird über beispielsweise ein Fahrgastinformationssystem oder Zugbeeinflussungssystem oder ähnlichem die Länge L der Oberleitung 12 im Einspeiseabschnitt 24 bereitgestellt. Aus der Länge L und der ermittelten Kontaktaufnahme kann die Kontaktbeendigung vorausberechnet werden. Damit können die Ausführungen der DE 102010029450 A1 an geeigneter Stelle gestartet werden, um das unproblematische Ablösen des Kontaktmittels 7 von der Oberleitung 12 vorzubereiten.

Sind an dem Fahrzeug 1, wie in der beispielhaften Ausführungsform der Figuren 1 - 6, zwei Kontaktmittel 7 vorhanden, kann auch auf die Information über die Länge L vorab gegebenenfalls verzichtet werden. Hierzu bleibt analog zu der mit Bezug auf Figur 5 beschriebenen Ausfahrt aus dem Einspeiseabschnitt 24 bei der Fahrt durch den gesamten Einspeiseabschnitt 24 der Schalter 9.1 geöffnet und das in Fahrtrichtung F vorne laufende Kontaktmittel 7.1 freigeschaltet. Die am freigeschalteten Kontaktmittel 7.1 gemessene Spannung wird mit der am stromführenden Kontaktmittel 7.2 verglichen. Im Bereich der Oberleitung 12 sind beide Spannungen gleich. Erreicht das freigeschaltete vorlaufende Kontaktmittel 7.1 den einspeisungsfreien Abschnitt hinter der Oberleitung 12 wird die anliegende Spannung zu Null. Da der Abstand 1 der beiden Kontaktmittel 7 zueinander bekannt ist, kann der Zeitpunkt beziehungsweise die Position der Kontaktbeendigung des nachlaufenden Kontaktmittels 7.2 vorausberechnet werden und über die Wegmesseinrichtung 21 kontrolliert werden. Die Maßnahmen aus der 102010029450 A1 werden ausreichend früh eingeleitet, um die Kontaktbeendigung des nachlaufenden Kontaktmittels 7.2 vorzubereiten.

In der Regel weist der Einspeiseabschnitt 25 an den Enden eine Rampe, Steigung oder Ähnliches auf, um ein leichtes Einfädeln der Kontaktmittel 7 zu ermöglichen. Hieraus kann sich eine gewisse Toleranz für die Länge L, auf der das Kontaktmittel 7 Kontakt mit der Oberleitung 12 hat, ergeben. Um dies zu kompensieren, kann der Kontaktpunkt vorher experimentell ermittelt werden und anschließend eine entsprechende Toleranz in die Wegerfassung eingebaut werden.

Für einen komplett oberleitungsfreien Betrieb zwischen den Haltestellen des Fahrzeugs 1 ist eine große Ladeleistung im Haltestellenbereich der Oberleitung 12 erforderlich. Innerhalb der üblichen Haltezeiten von maximal 30 Sekunden muss die Energie, die auf einer folgenden Fahrdauer von üblicher Weise 60 - 90 Sekunden von den Antrieben 3 und dem Bordnetz 5 des Fahrzeugs 1 umgesetzt wird, über die Kontaktmittel 7 eingespeist werden. Diese Energie ist über die stationären Punktkontakte zwischen Kontaktmittel 7 und Oberleitung 12 zu führen. Daher werden, wie oben bereits erwähnt, zur Optimierung der Oberleitung 12 als Einspeiseeinrichtung und des Kontaktmittels 7 als Stromabnehmer des Fahrzeugs 1 üblicherweise mindestens zwei Kontaktmittel 7 eingesetzt. Bei wenigstens zwei Kontaktmitteln 7 kann der Punkt der Kontaktbeendigung sehr genau erfasst werden, wenn jedes Kontaktmittel 7 mit einem zugeordneten Schalter 9 und einer zugeordneten Detektoreinrichtung 8 versehen ist, wie in der Ausführungsform der Figuren 1 - 6 gezeigt. Im oberleitungsfreien Abschnitt sind die Schalter 9 geöffnet. Wenn das erste Kontaktmittel 7.1 die Oberleitung 12 kontaktiert, wie oben mit Bezug auf Figur 2 beschrieben, und die Wegerfassung mittels der Wegmesseinrichtung 21 gestartet wurde, kann die Kontaktierung des nachlaufenden Kontaktmittels 7.2 in gleicher Weise mittels der zweiten Detektoreinrichtung 8 erfasst werden, wie oben mit Bezug auf Figur 4 beschrieben, und als Synchronisation genutzt werden. Aus dem Vergleich beider Werte und gegebenenfalls mit einer Wichtung mit einem Erfahrungswert kann eine Toleranz der Wegerfassung über die Wegmesseinrichtung 21 abgeglichen und möglichst klein gehalten werden.

Alternativ zur Spannungsmesseinrichtung 22 kann die Detektoreinrichtung 8 auch andere Sensoren umfassen, die den Kontakt des Kontaktmittels 7 mit der Oberleitung 12 erfassen. Beispielsweise ist hier eine Lichtschranke, ein Näherungsschalter oder ein Taster einsetzbar, die oder der eine Auslenkung des Kontaktmittels 7 bei Kontaktaufnahme mit der Oberleitung 12 erfasst.

## Patentansprüche

1. Elektrische Schaltung (2) für ein Fahrzeug (1), mit wenigstens einem elektrischen Kontaktmittel (7) zur zeitweise lösbaren elektrischen Verbindung mit einem fahrzeugexternen elektrischen Netz (13) mit einem fahrzeuginternen elektrischen Netz (14), und mit wenigstens einer Detektoreinrichtung (8), die ermittelt, ob eine Verbindung zwischen dem Kontaktmittel (7) und dem fahrzeugexternen Netz (13) besteht,
mit wenigstens einem Schaltmittel (9), das eine elektrische Verbindung zwischen dem Kontaktmittel (7) und dem fahrzeuginternen Netz (14) in Abhängigkeit von der ermittelten Verbindung zwischen dem Kontaktmittel (7) und dem fahrzeugexternen Netz (13) schließt, wobei die Detektoreinrichtung (8) so ausgebildet ist, dass sie bei getrennter Verbindung zwischen dem Kontaktmittel (7) und dem fahrzeuginternen Netz (14) ermittelt, ob eine Verbindung zwischen dem Kontaktmittel (7) und dem fahrzeugexternen Netz (13) besteht, und mit
wenigstens einer Wegmesseinrichtung (21), die ein repräsentatives Signal für einen vom Fahrzeug (1) zurückgelegten Fahrweg ausgibt, wobei die Schaltung (2) ausgebildet ist, aus dem Zeitpunkt oder der Position der von der Detektoreinrichtung (8) ermittelten Verbindung und einer Länge (L) des fahrzeugexternen elektrischen Netzes (13) den Zeitpunkt oder die Position einer Kontaktbeendigung zu bestimmen.

2. Schaltung (2) nach Anspruch 1,
**dadurch gekennzeichnet, dass**
die Detektoreinrichtung (8) wenigstens eine Spannungsmesseinrichtung (22) umfasst, mit der eine am Kontaktmittel (7) anliegende Spannung bei getrennter Verbindung zwischen Kontaktmittel (7) und fahrzeuginternen Netz (14) erfassbar ist.

3. Schaltung nach Anspruch 2,
**dadurch gekennzeichnet, dass**
die Spannungsmesseinrichtung (22) wenigstens einen Spannungswandler aufweist.

4. Schaltung (2) nach einem der oben genannten Ansprüche,
**dadurch gekennzeichnet, dass**
die Schaltung (2) wenigstens zwei Kontaktmittel (7.1, 7.2), wenigstens zwei Schaltmittel (9.1, 9.2) und wenigstens zwei Detektoreinheiten (8.1, 8.2) aufweist und jedem Kontaktmittel (7.1, 7.2) wenigstens ein Schaltmittel (9.1, 9.2) und wenigstens eine Detektoreinheit (8.1, 8.2) zugeordnet sind.

5. Schaltung (2) nach einem der oben genannten Ansprüche,
**dadurch gekennzeichnet, dass**
das fahrzeuginterne Netz (14) wenigstens einen Energiespeicher (4) und/oder wenigstens einen Antrieb (3) aufweist.

6. Verfahren zur Kontaktaufnahme und/oder -beendigung eines Fahrzeugs (1) mit einem fahrzeugexternen elektrischen Netz (13), bei dem ermittelt wird, ob eine Verbindung zwischen dem Kontaktmittel (7) und dem fahrzeugexternen Netz (13) besteht, bei dem vor der Kontaktaufnahme und/oder -beendigung eine elektrische Verbindung zwischen einem fahrzeuginternen elektrischen Netz (14) und wenigstens einem Kontaktmittel (7), das zur elektrischen Verbindung des Fahrzeugs (1) mit dem fahrzeugexternen Netz (13) ausgebildet ist, getrennt wird und bei dem die Kontaktaufnahme oder -beendigung bei getrennter Verbindung zwischen dem Kontaktmittel (7) und einem fahrzeuginternen elektrischen Netz (14) stattfindet, wobei die Kontaktaufnahme oder -beendigung durch eine Änderung der am Kontaktmittel (7) anliegenden Spannung ermittelt wird und die Kontaktbeendigung des Kontaktmittels (7) mit dem fahrzeugexternen Netz (13) mit Hilfe der ermittelten Kontaktaufnahme des Kontaktmittels (7) mit dem fahrzeugexternen Netz (13) und einer Länge (L) des fahrzeugexternen elektrischen Netzes (13) vorausberechnet wird, wobei die Kontaktbeendigung anhand des vom Fahrzeug (1) zurückgelegten Weges seit der Kontaktaufnahme vorausberechnet wird.

7. Verfahren nach Anspruch 6, **dadurch gekennzeichnet, dass**
die ermittelte Kontaktaufnahme und/oder -beendigung mit bekannten Informationen über den Fahrweg des Fahrzeugs verglichen werden.

8. Verfahren nach einem der Ansprüche 6 bis 7, **dadurch gekennzeichnet, dass**
nach der ermittelten Kontaktaufnahme des Kontaktmittels (7) mit dem fahrzeugexternen Netz (13) die elektrische Verbindung zwischen dem fahrzeuginternen Netz (14) und dem Kontaktmittel (7) geschlossen wird.

9. Verfahren nach einem der Ansprüche 6 bis 8, **dadurch gekennzeichnet, dass**
mehrere Kontaktaufnahmen von mehreren Kontaktmitteln (7.1, 7.2) des Fahrzeugs (1) mit dem fahrzeugexternen Netz (13) für jedes Kontaktmittel (7.1, 7.2) separat ermittelt werden.

## Claims

1. Electrical circuit (2) for a vehicle (1), comprising at least one electrical contact means (7) for intermittently detachable electrical connection to an external electrical network (13) and to an in-vehicle electrical network (14), and with at least one detector device (8) which determines whether a connection exists between the contact means (7) and the external network (13), with at least one switching means (9) which closes an electrical connection between the contact means (7) and the in-vehicle network (14) depending on the connection determined between the contact means (7) and the external network (13), wherein the detector device (8) is designed such that, in the event of disconnection between the contact means (7) and the in-vehicle network (14), it determines whether a connection exists between the contact means (7) and the external network (13), and with at least one distance measuring device (21) which outputs a signal indicative of a distance travelled by the vehicle (1), wherein the circuit (2) is embodied to determine the time or the position of a contact breaking from the time or the position of the connection detected by the detector device (8) and a length (L) of the vehicle-external electrical network (13).

2. Circuit (2) according to claim 1,
**characterised in that** the detector device (8) comprises at least one voltage measuring device (22) with which a voltage present at the contact means (7) can be measured in the event of disconnection between contact means (7) and in-vehicle network (14).

3. Circuit (2) according to claim 2,
**characterised in that** the voltage measuring device (22) has at least one voltage transformer.

4. Circuit (2) according to one of the preceding claims,
**characterised in that** the circuit (2) has at least two contact means (7.1, 7.2), at least two switching means (9.1, 9.2) and at least two detector units (8.1, 8.2), and each contact means (7.1, 7.2) is assigned at least one switching means (9.1, 9.2) and at least one detector unit (8.1, 8.2).

5. Circuit (2) according to one of the preceding claims,
**characterised in that** the vehicle's internal network (14) has at least one energy storage device (4) and/or at least one drive (3).

6. Method for the making and/or breaking of contact of a vehicle (1) with an external electrical network (13) wherein it is determined whether a connection exists between the contact means (7) and the external network (13), wherein, prior to contact making and/or breaking, an electrical connection between an in-vehicle electrical network (14) and at least one contact means (7) which is designed to electrically connect the vehicle (1) to the external network (13) is cut, and wherein the contact making or breaking takes place when the contact means (7) and an in-vehicle electrical network (14) are disconnected from one another, wherein the contact making or breaking is determined by a change in the voltage present at the contact means (7) and the breaking of contact of the contact means (7) with the external network (13) is calculated in advance using the determined making of contact of the contact means (7) with the external network (13) and a length (L) of the vehicle-external electrical network (13), wherein the contact breaking is calculated in advance on the basis of the distance travelled by the vehicle (1) since contact making.

7. Method according to claim 6,
**characterised in that** the contact making and/or breaking determined is compared with known information about the route of the vehicle.

8. Method according to one of claims 6 to 7,
**characterised in that**, after the determined contact making between the contact means (7) and the external network (13), the electrical connection between the in-vehicle network (14) and the contact means (7) is closed.

9. Method according to one of claims 6 to 8,
**characterised in that** a plurality of contact makings by a plurality of contact means (7.1, 7.2) of the vehicle (1) with the external network (13) are determined separately for each contact means (7.1, 7.2).

## Revendications

1. Circuit (2) électrique d'un véhicule (1), comprenant au moins un moyen (7) de contact électrique pour se connecter électriquement, d'une manière déconnectable de temps en temps, à un réseau (13) électrique extérieur au véhicule, par un réseau (14) électrique intérieur au véhicule et comprenant au moins un dispositif (8) formant détecteur, qui détermine s'il y a une connexion entre le moyen (7) de contact et le réseau (3) extérieur au véhicule,
comprenant au moins un moyen (9) de coupure, qui ferme une connexion électrique entre le moyen (7) de contact et le réseau (14) intérieur au véhicule en fonction de la détermination d'une connexion entre le moyen (7) de contact et le réseau (13) extérieur au véhicule, le dispositif (8) formant détecteur étant constitué de manière à déterminer, lorsque la connexion est coupée entre le moyen (7) de contact et le réseau (4) intérieur au véhicule, s'il y a une connexion entre le moyen (7) de contact et le réseau (13) extérieur au véhicule, et comprenant
au moins un dispositif (21) de mesure du trajet, qui émet un signal représentant un trajet parcouru par le véhicule (1), le circuit (2) étant constitué pour, à partir de l'instant ou de la position de la détermination de la connexion par le dispositif (8) formant détecteur, déterminer l'instant ou la position d'une cessation de contact.

2. Circuit (2) suivant la revendication 1,
**caractérisé en ce que**
le dispositif (8) formant détecteur comprend au moins un dispositif (22) de mesure de la tension, par lequel une tension appliquée au moyen (7) de contact peut être détectée, lors de la coupure de la connexion entre le moyen (7) de contact et le réseau (14) intérieur au véhicule.

3. Circuit (2) suivant la revendication 2,
**caractérisé en ce que**
le dispositif (22) de mesure de la tension a au moins un transducteur de tension.

4. Circuit (2) suivant l'une des revendications précédentes,
**caractérisé en ce que**
le circuit (2) a au moins deux moyens (7.1, 7.2) de contact, au moins deux moyens (9.1, 9.2) de coupure et au moins deux unités (8.1, 8.2) formant détecteur et, à chaque moyen (7.1, 7.2) de contact est associé au moins un moyen (9.1, 9.2) de coupure et au moins une unité (8.1, 8.2) formant détecteur.

5. Circuit (2) suivant l'une des revendications précédentes,
**caractérisé en ce que**
le réseau (14) intérieur au véhicule a au moins un accumulateur (4) d'énergie et/ou au moins un entraînement (3).

6. Procédé de prise et/ou de cessation de contact d'un véhicule (1) avec un réseau (13) électrique extérieur au véhicule, dans lequel on détermine s'il y a une connexion entre le moyen (7) de contact et le réseau (13) extérieur au véhicule, dans lequel, avant la prise et/ou la cessation de contact, on coupe une connexion électrique entre un réseau (14) électrique intérieur au véhicule et au moins un moyen (7) de contact, qui est constitué pour la connexion électrique du véhicule (1) au réseau (13) extérieur au véhicule, et dans lequel la prise ou la cessation de contact a lieu alors que la connexion entre le moyen (7) de contact et un réseau (14) électrique intérieur au véhicule est coupée, dans lequel on détermine la prise ou la cessation de contact par une variation de la tension appliquée au moyen (7) de contact et on calcule à l'avance la cessation de contact du moyen (7) de contact avec le réseau (13) extérieur au véhicule à l'aide de la prise de contact, qui a été déterminée, du moyen (7) de contact avec le réseau (13) extérieur au véhicule et d'une longueur (L) du réseau (13) électrique extérieur au véhicule, la cessation du contact étant calculée à l'avance à l'aide du trajet parcouru par le véhicule (1) depuis la prise de contact.

7. Procédé suivant la revendication 6,
**caractérisé en ce que**
l'on compare la prise et/ou la cessation de contact, qui a été déterminée, à des informations connues sur le trajet du véhicule.

8. Procédé suivant l'une des revendications 6 à 7,
**caractérisé en ce qu'**
après la détermination de la prise de contact du moyen (7) de contact avec le réseau (13) extérieur au véhicule, on coupe la connexion électrique entre les réseaux (14) intérieurs au véhicule et le moyen (7) de contact.

9. Procédé suivant l'une des revendications 6 à 8,
**caractérisé en ce que**
l'on détermine, indépendamment pour chaque moyen (7.1, 7.2) de contact, plusieurs prises de contact de plusieurs moyens (7.1, 7.2) de contact du véhicule (1) avec le réseau (13) extérieur au véhicule.
